# EUROPEAN PATENT SPECIFICATION

(11) **EP 3 020 276 B1**
(45) Date of publication and mention of the grant of the patent: **28.02.2018**
(21) Application number: 14193239.2
(22) Date of filing: 14.11.2014
(51) Int. Cl.: A01N 1/02, F25B 9/14, F25D 29/00

(54) **Method and apparatus for cryopreserving biological specimens**
Verfahren und Vorrichtung zum Kryopräservieren biologischer Proben
Procédé et appareil permettant de cryoconserver des échantillons biologiques

(43) Date of publication of application: 18.05.2016
(73) Proprietor: Milestone S.r.l., 24010 Sorisole (BG) (IT)
(72) Inventor: Visinoni, Francesco, 24030 Mozzo (BG) (IT); Bellini, Marco, 24128 Bergamo (IT); Bellini, Michele, 24060 Villongo (BG) (IT)
(74) Representative: Kiwit, Benedikt

(56) References cited:
- EP-A2- 2 623 892
- WO-A1-93/07745
- WO-A1-98/30089
- WO-A1-2013/096710
- CN-A- 102 154 202
- US-A1- 2006 063 141
- Anonymous: "HictoChill(TM) Tissue Freezing Bath", , 23 May 2012 (2012-05-23), XP055188537, Retrieved from the Internet: URL:http://web.archive.org/web/20120523203 946/http://www.portercreekinstruments.com/ HistoChill Spec Sheet FINAL.pdf [retrieved on 2015-05-11]

## Description

The present invention relates to a method as well as an apparatus for cryopreserving biological specimens such as human and animal tissues, cell types and subcellular materials for sample cryopreservation for biobanking and molecular studies. More specific, the present invention relates to an innovative method and apparatus to improve and standardize the snap freezing procedure in collecting samples for biobanking and molecular studies.

A biobank is a type of biorepository that stores biological samples (usually human) for use in research. Since the late 1990s, biobanks have become an important resource in medical research supporting many types of contemporary research such as genomics and personalized medicine.

Biobanks give researches access to data representing larger numbers of people than could be analyzed before. Furthermore, samples in biobanks and the data derived from those samples can often be used by multiple researchers for multiple purposes. Large collections of samples representing tens or hundreds or even thousands of individuals are necessary to conduct these kinds of studies so that researchers may perform such studies only with large numbers of samples. Many researchers struggle to acquire sufficient samples prior to the advent of biobanks.

Biobanks are heterogeneous in their design and use, and they range in size. They may contain data and samples from family studies, or from patients with a specific disease, or they may be part of large-scale epidemiologic collections, or collections from clinical trials of new medical interventions. The samples collected will typically include whole blood and its fractions, extracted genomic DNA, whole cell RNA, urine, as well as, variously, saliva, nail clippings, hair and a variety of other tissues and material relevant to the design of specific studies.

Inevitably, data and samples are collected under different conditions to different standards and for different purposes. Some biobanks take a highly centralized approach to the collection, processing and archiving of samples, but are shipped to a central processing and storage facility. While ensuring robust quality control and data integrity and security, this approach inevitably introduces a delay between collection and cryopreservation that may result in the loss of labile species in the samples. Conversely, other large studies will aim to collect and process participant samples as quickly as possible. Here, samples are collected at fundraising events and in workplace settings and are processed within a few hours by local laboratories before low-temperature archiving. The challenges here arc to maintain consistency of collection, shipping and processing. A hybrid approach is taken in other studies where a proportion of the participant samples are processed and stored locally, with a second set stored in a centralized archive.

The first and most important process of stabilizing biological material at cryogenic temperatures suitable for molecular studies is called cryopreservation, a practical application of cryobiology, or the study of life at low temperatures. Advances in cryopreservation technology have led to methods that allow low temperature maintenance of a variety of tissues, cell types and subcellular materials. Techniques are available for the preservation of microorganisms, tissues, primary cells, established cell lines, small multicellular organisms, complex cellular structures such as embryos as well as nucleic acid and proteins.

The object of cryopreservation is to minimize damage to biological materials during low temperature freezing and storage. The ultimate goal is to provide a continuous source of tissues and genetically stable living cells for a variety of purposes, including research and biomedical processes.

Water, the major component of all living cells must be present for chemical reactions to occur within a cell. During cryopreservation, the water changes to ice and cellular metabolism ceases. Dehydration also occurs, changing the concentration of salts and other metabolites and creating an osmotic imbalance that can be detrimental to cell recovery.

The freezing process involves complex phenomena that, even after decades of research, are not yet fully understood. Cryobiological studies have led to speculation on what occurs during the freezing of living cells and how adverse phenomena can be overcome.

Since water is the major component of all living cells and must be available for the chemical processes of life to occur, cellular metabolism stops when all water in the system is converted to ice. Ice forms at different rates during the cooling process.

Slow cooling leads to freezing external to the cell before intercellular ice begins to form. As ice forms external to the cell, water is removed from the extracellular environment and an osmotic imbalance occurs across the cell membrane leading to water migration out of the cell. The increase in solute concentration outside the cell, as well as intracellularly as water leaves the cell, can be detrimental to cell survival. If too much water remains inside the cell, damages due to ice crystal formation and recrystallization during warming can occur and is usually lethal.

Rapid cooling minimizes the solute concentration effects as ice forms uniformly, but leads to formation of more intracellular ice since water has not migrated out of the cell. As already mentioned, slow cooling on the other hand results in a greater loss of water from the cell and less internal ice being formed, but results in an increase in the solution effects. Cell permeability affects the rate of water loss; more permeable cells are able to tolerate rapid cooling better than less permeable cells. Scientific literature indicates that ice crystal formation and solution effect both play a role in cell damage.

For these reasons, it is assumed that a key element of a good cryopreservation program is standardization of the processes employed. Because of the complexity of the preservation process, small variations in processing and storage can lead to sublet changes in the biological materials. By standardizing the methodologies there is greater assurance that search results will be consistent and comparable. Therefore, once a successful cryopreservation regimen is established, efforts should be made to carefully document and methodology.

As today, snap freezing is a standard cryopreservation technique in which a sample is rapidly frozen. This is usually supported by using dry ice, a dry ice/ethanol slurry or liquid nitrogen. Snap freezing reduces the chance of water present in the sample forming ice crystals during the freezing process, and better maintains the integrity of the sample. In the case of tissues, snap freezing slows the actions of proteases and nucleases to inhibit degradation of molecules such as RNA or proteins. Typically, snap freezing is performed either directly in dry ice or in a bath containing dry ice with ethanol or isopropanol. liquid nitrogen is also commonly used for snap freezing tissue pieces.

The major drawback of present snap freezing processes is the uncontrolled cooling rate, as the tissues are suddenly dropped to a very low temperature environment, typically at about -80 °C. US 2006/0063141 A1 discloses a cryopreservation method, wherein cells are cooled to a first temperature between -3° C and -30° C, followed by cooling to a second temperature below -60° C in 0.1 to 5 minutes using linear or nonlinear profiles.

It is thus an object of the present invention to provide a method and an apparatus for cryopreserving biological tissue samples for biobanking cryopreservation which optimizes the currently known techniques and can result in a standardized technique procedure for collecting human and animal tissues for biobanking and molecular studies.

This object is achieved by the subject-matter of the independent claims. Preferred embodiments are defined in the dependent claims. According to a first aspect, the present invention relates to a method as defined in claim 1.

In a first step, the specimen is placed in a cooling fluid pre-set at a first predetermined temperature of between -10 °C and -60 °C for snap freezing - i.e. rapidly freezing - the specimen. In a preferred embodiment, the first predetermined temperature is set between -20 °C and -50 °C, more preferred between -35 °C and -45 °C, most preferably at -40 °C. In a most preferred embodiment, the first predetermined temperature is set at a temperature between -20 °C and -40 °C. It is noted that the first predetermined temperature is set according to the type of sample (cells, tissues, etc.) to be cryo-preserved to allow for a rapidly (snap) freezing of the specimen. The temperature of the specimen before being placed in the cooling fluid being pre-set at the first predetermined temperature usually is room temperature.

In a second step of the method according to the invention, the temperature of the cooling fluid is reduced to a second predetermined temperature which temperature is suitable for preserving said specimen. In other words, the second predetermined temperature is lower than the first predetermined temperature and is preferably between -70 °C and -90 °C, more preferably between -75 °C and -85 °C, and most preferably at about -80 °C.

According to the invention, the reduction of the temperature in the second step of the method is performed by a predetermined cooling profile. The predetermined cooling profile is performed with a predetermined cooling rate of between 0.5 °C per minute and 3 °C per minute, preferably of 1 °C per minute. The predetermined cooling profile can be linear, non-linear or stepwise.

In a preferred embodiment, the temperature of the cooling fluid and/or preferably the specimen is directly or indirectly measured, preferably continuously measured. The temperature reduction in the second step of the method is controlled by a PID algorithm (proportional integral derivative algorithm) using a PID controller. By using the PID algorithm and based on the measured and stored temperatures, a control point or control value will be determined which will then be transferred into an on/off control of the cooling process; i.e. an on/off control of a corresponding cooling means.

The specimen in the first step is directly placed in the cooling fluid or it is placed in a container like a cryovial or basket, preferably made of PDFE, which is then placed in the cooling fluid.

The first step of the inventive method may also comprise the step of placing a plurality of specimens successively or all at once in the cooling fluid (either directly or indirectly) and only after a predefined number of specimens (preferably all specimens) are placed in the pre-cooled cooling fluid for snap freezing of the specimen up to the first predetermined temperature, the second step of the method is carried out.

The cooling fluid is preferably a cooling liquid. Said cooling liquid preferably does not freeze during the process. The cooling fluid or liquid can be isopentane or a non-flammable substitute cooling liquid like NOVEC™ 7000 of 3M™.

The method according to the invention thus consists in keeping the initial cooling fluid or freezing agent in a cooling means like an (aluminum) reservoir or container, at a first pre-set temperature. This pre-set temperature can be set at a temperature to allow for snap freezing or rapidly freezing the specimen. According to the type of the sample (cell, tissues, etc.) to be cryo-preserved, this initial first predetermined and pre-set temperature can be set, preferably, between -20 °C and -40 °C. As soon as the samples are immersed or at least placed in the freezing agent stored in a receiving means of a corresponding apparatus - and preferably not before reaching a desired (freezing) temperature in the specimen - the second step of the method is carried out, e.g. in that the operator can activate a predefined cooling procedure via a software interface. Then, the apparatus control, by the PID software, drops the freezing agent temperature to about -80 °C or any other suitable temperature for preserving said specimen with a predetermined cooling profile preferably having a controlled cooling rate of 1 °C per minute. To facilitate the handling and operations, the samples can be either placed in cryo-vials (i.e. for fragile tissues or cells) or in a dedicated PTFE basket or the like and then dropped into the cooling liquid.

The method thus includes the possibility to create a snap freezing standardized protocol with an initial pre-set temperature for freezing the specimen and a following cooling profile to the desired final storage temperature with a precise cooling rate of, for instance, 1 °C per minute for overcoming the drawbacks of the known technique. Hence, it is possible by the initial snap freezing step to cool the specimen up to a desired temperature to reduce the chance of water present in the sample forming ice crystals during the freezing process thus better maintaining the integrity of the sample while on the other hand the subsequent controlled cooling profile with predetermined cooling rates allows for a minimization of the variables of low cell recovery due to hydration or ice crystal formation to ensure maximum viability for a wide variety of cells. Programmed uniform cooling rates are effective for a variety of freezing applications, including stem cells, embryos, hard valves and cord blood. Hence, presently known detrimental effects when freezing biological materials with different techniques can be minimized or even overcome by the method according to the present invention.

According to another aspect, the present invention refers to an apparatus as defined in claim 9. The apparatus comprises a receiving means for receiving a cooling fluid and said specimen as well as a cooling means to cool said fluid in said receiving means. According to the present invention, the apparatus further comprises a controller which is configured for keeping the temperature of said cooling fluid at a first predetermined temperature of between -10 °C and -60 °C for snap freezing - i.e. rapidly freezing - said specimen when said specimen is placed in said receiving means containing said cooling fluid. The controller is further configured to reduce - in a subsequent step following the first step - the temperature of said cooling fluid to a second predetermined temperature suitable for preserving said specimen with a predetermined cooling profile after the specimen has been placed in the receiving means. The controller is configured to control the cooling means by a PID algorithm as already defined above and is thus a PID controller.

The receiving means preferably comprises at least one or a plurality of reservoirs for receiving the cooling fluid and also for receiving a specimen and/or a container like a cryovial or a basket, preferably made of PTFE, carrying the specimen and to be placed in the cooling fluid. Further, the receiving means may comprise a working means like a working plate being in (thermal and preferably also physical) contact with the at least one reservoir and, preferably, also with the cooling means. According to one alternative, the reservoir is integrally formed with the working means. According to another alternative, the reservoir is preferably removably placed on or attached to the working means. Also, a combination of these two alternatives on the same working means is possible. Preferably, the receiving means may further comprise a transfer means thermally connecting the working means and the cooling means and/or reservoir(s). The cooling means can thus alternatively or additional be in contact (direct physical or at least thermal contact) with the reservoir(s).

The receiving means can be made of a material having a high thermal conductivity. Such materials can be, for instance, metals like aluminum or stainless steel, while the present application is not limited to these materials.

In a preferred embodiment, the cooling means is a stirling cooler preferably using argon gas. The cooling means, preferably the stirling cooler, can have a cooling part which is in thermal contact with at least a part of the receiving means or at least the reservoir(s), preferably in direct physical contact therewith. Using a stirling cooler rather than a common compressor has the advantage that the temperature cycles of common compressors can oscillate various degrees as the cooling mechanism is slow while a stirling cooler allows for a precise temperature adjustment only having a temperature deviation of at most +/- 1°C.

Furthermore, the apparatus may comprise a cover to provide a closed working area at least enclosing the receiving means or reservoir(s) and to keep the working area thermally insulated from the external environment. The apparatus may further comprise a defrost arrangement like an air pump and a reverse heating element to defrost the working area preferably at pre-set cycles.

According to the present invention, there is thus provided a specific apparatus for carrying out the before-mentioned method and being provided in order to quickly manage the temperature condition and cooling profile of the cooling fluid (i.e. cooling liquid or freezing agent), such as isopentane or alternative non-flammable substitutes, preferably contained in a dedicated reservoir like a container.

One component of the apparatus hardware is the cooling means which preferably is a stirling (engine) cooler, i.e. a specific type of compressor that is able to quickly bring and maintain a preset temperature preferably through the utilization of Argon gas in a sealed piston cylinder.

To precisely follow the cooling temperature profile, the cooling means or stirling cooler is preferably controlled by a PID algorithm of a dedicated apparatus system software.

In order to quickly transmit the low temperature generated by the cooling means, a cooling part - e.g. the top tip of the cylinder of the stirling cooler - is in direct (thermal or even physical) contact with preferably all the surfaces to be cooled, in particular to the (dedicated) reservoirs or containers where the freezing agent is stored in. To ensure a very rapid temperature transfer and control, the parts in direct thermal or even physical contact with the stirling engine cooler cylinder container are preferably made by aluminum material or any other material suitable for high thermal conduction.

The stirling cooler may have a cooling capacity of about 80 watt in case of a total sample volume (liquid cooling medium and specimen) of 50 ml. The specimen could then have a total volume of about 1 ml or 1 mg.

Further advantages and specific features will now be described with respect to the accompanied figures, which show:
- Fig. 1: a perspective view of an apparatus according to a first embodiment of the present invention,
- Fig. 2: a side sectional view of the apparatus according to figure 1,
- Fig. 3: a perspective view of an apparatus according to a second embodiment of the present invention, and
- Fig. 4: a display of an apparatus according to the present invention.

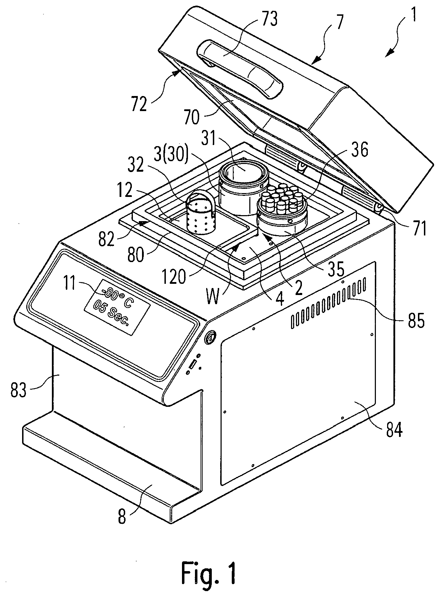

Figures 1 to 2 show a first embodiment of the apparatus 1 for cryopreserving biological specimens such as human and animal tissues, cell types and subcellular materials for biobanking cryopreservation according to the present invention. The apparatus 1 comprises a receiving means 2 for receiving a cooling fluid and a specimen. The cooling fluid can be a cooling liquid (in the following, cooling fluid and cooling liquid are interchangeably used but all refer to a corresponding cooling fluid; while preferably a cooling liquid is used). The cooling fluid or liquid preferably does not freeze during the process. The cooling liquid can be isopentane or any other nontoxic and/or non-flammable substitute cooling liquid like to NOVEC™ 7000 of 3M™.

The receiving means 2 can comprise at least one or even a plurality of reservoirs 3 for receiving the cooling fluid, A first kind of such a reservoir 3 could be a vessel 30. This vessel 30 can be covered by a cover 31 which is, preferably, made of PTFE. In this vessel 30, the cooling fluid can be provided/stored at least for the process and preferably also for preservation of a particular specimen.

The specimen can be placed in the cooling fluid (stored in the cooling vessel 30) either directly or it is placed in a basket 32, preferably made of PTFE, carrying the specimen and which is adapted to be placed in the cooling fluid, e.g., provided in the vessel 30. This layout is depicted in figure 1 on the left handed side. Alternatively, it is also possible that the specimen is stored/placed in a receiving container 36 like a cryovial carrying the specimen and also being adapted to be placed in the cooling fluid, e.g., provided in the vessel 30. This layout is usually used for fragile tissues or cells. A dedicated or predetermined number of cryovials can also be carried in/on a carrier (not shown) which is adapted to be placed in the cooling fluid, e.g., provided in the vessel 30. Hence, a plurality of cryovials can be handled all together thus facilitating the handling of the system and expediting the process/method.

There may also be provided a receptacle 35 for receiving the containers 36 (e.g. cryovials) carrying the specimens which were or will be placed in the cooling fluid in the reservoir 3, 30. The receptacle 35 can be provided as a block. The receptacle thus serves as a storage area for a particular number of containers 36. According to figure 1, the apparatus 1 or receptacle 35 has a storage area for up to 12 cryovials 36 while the application is not limited to a particular number or type of such containers 36. The storage area allows the operator to momentarily keep a plurality of specimen samples to the right storage temperature - which can be set independently - before the final collection is completed. The receptacle 35 can thus be defined as a storage area preferably to maintain the specimens in the cryovials, preferably previously frozen to the minimum set value in the cooling fluid of the reservoir 3, 30. Accordingly, the maintaining temperature of the receptacle 35 can be defined as the minimum temperature of the corresponding/present/predetermined cooling protocol thus being laid out for storage of the specimen within the system/apparatus 1.

The receiving means 2 may thus comprise at least one or a plurality of reservoirs 3, 30 for receiving the cooling fluid and for receiving the specimen and/or a container like a cryovial 36 or a basket 32, preferably made of PTFE, carrying the specimen and which can be placed in the cooling fluid stored in the respective reservoir 3, 30.

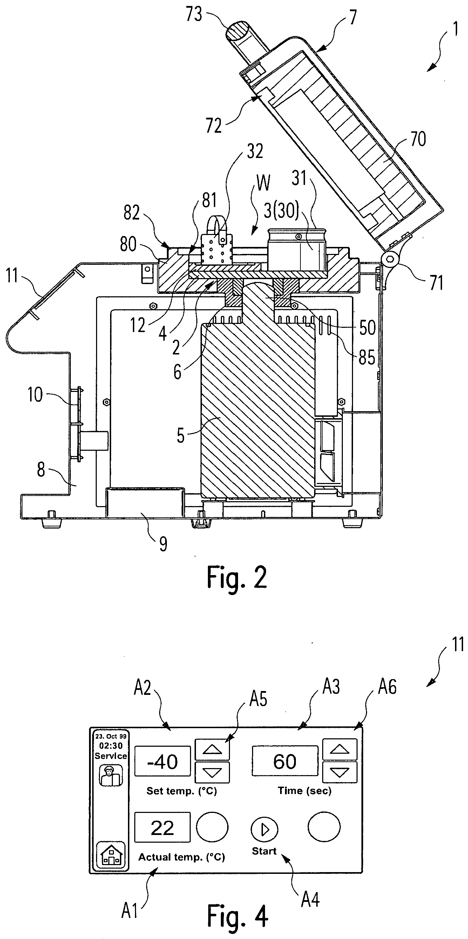

As shown in figures 1 and 2, the receiving means 2 may further comprise a working means 4 like a working plate. This working means 4 at least forms the bottom of a working area W for carrying out the process according to the invention. The working means or working plate 4 is preferably in thermal contact with the at least one reservoir 3, 30 and preferably also the receptacle 35. According to this embodiment, the reservoir 3, 30 (and receptacle 35) can be placed on or attached to the working means 4 and is preferably removably provided thereon. If the reservoir 3, 30 (and receptacle 35) is removably placed on the working means 4, the working means 4 and the reservoir 3 (and working means 4 and receptacle 35) are preferably in thermal (and physical) contact with each other by or via flat contact areas.

According to a further alternative embodiment, the reservoir 3 can also be integrally formed with the working means 4. Therefore, the working means 4 can comprise dents, i.e. can have one or more recesses forming the reservoirs 3 for receiving the cooling fluid.

Within the working area W and preferably on top of the working means 4 there can be provided a working member 12. This working member 12 can be made of PTFE or the like. The working member 12 is preferably removably placed on the working means 4. The working member 12 can be used for placing the basket 32 or any other feature thereon before, during or after the process. The working member 12 may comprise a projecting edge portion 120 as a leakage or overfill protection.

The apparatus 1 further comprises a cooling means 5 being shown in figure 2 and which is adapted to cool the fluid in the receiving means 3 and thus also a specimen being placed in the cooling fluid. The cooling means 5 preferably is a stirling cooler using a gas, preferably argon gas, in a piston cylinder to create the necessary temperature exchange. The stirling cooler or engine 5 is specifically suitable for temperatures below -40 °C, it has better efficiency than conventional compressors and it can also be provided in quite compact dimensions. Having the argon gas in the seal cylinder, there is no need to regenerate it with periodical maintenance as in a common standard gas compressor.

To ensure a quick and precise temperature transfer from the cooling means 5 to the cooling fluid and thus to the specimen to be treated, a cooling part 50 of the cooling means 5 is preferably in thermal contact with at least a part of the receiving means 2 or at least the reservoir 3, 30, preferably in direct physical contact therewith. For storage purposes, also the receptacle 35 can be in thermal or even direct physical contact with the cooling part 50. To allow for a sufficient thermal transfer, the cooling part 50 is preferably in flat contact with the features to be cooled 3, 30, 35. For design or any other reasons, it can also be suitable that the receiving means 2 further comprises a transfer means 6 for thermally connecting the cooling means 5 (or cooling part 50 thereof) and the working means 4 and/or the reservoirs 3, 30 and/or the receptacle 35. Therefore, all the respective parts are preferably in flat physical contact with each other. Moreover, all the parts in thermal contact with each other, like the receiving means 2 comprising the reservoirs 3, 30, the receptacle 35, the working means 4 and the transfer means 6 are preferably made of a material having a high thermal conductivity. Such materials can be, for instance, metals like aluminum or stainless steel, while the present application is not limited to these materials.

As can be derived from figures 1 and 2, the apparatus 1 may further comprise a cover 7 to provide a closed working area W at least enclosing the receiving means 2 or reservoir 3, 30 and preferably also the receptacle 35. The cover 7 may further comprise a corresponding insulation member 70 being at least partially provided around the working area W in case the cover 7 is in a closed position. The cover 7 can thus be provided to keep the working area W thermally insulated from the external environment.

To easily move the cover between the mentioned closed position and an opened position to access the working area W, the cover 7 can be pivotally supported. Therefore, the cover 7 is preferably pivotally connected via hinges 71 or the like to a base 8. The cover 7 may comprise a handle 73 for easily manipulating, i.e. opening and closing, the cover 7.

The base 8 can carry most of the components of the apparatus 1 like the receiving means 2 and the cooling means 5. To provide a sufficiently insulated closed working area W when the cover 7 is in its closed position, the base 8 can also comprise an insulation member 80 which at least partially surrounds or encloses the receiving means 2 and has an upper opening 81 to access the working area W. The insulation member 80 may also comprise a bottom opening through which extends a part of the receiving means 2 (e.g. transfer means 6) and/or the cooling means 5 (e.g. cooling part 50). Moreover, the insulation member 80 of the base may comprise a profiled rim portion 82 which preferably corresponds with a corresponding profiled rim portion 72 of the insulation member 70 of the cover 7 to provide a sealed working area W when the cover 7 is in its closed position.

For design reasons, the base 8 can comprise a casing 83 to cover the interior of the apparatus 1. At least one of the sides of the base 8 can comprise an openable wall member 84 to access the interior of the apparatus 1 where, for instance, the cooling means 5 is positioned. There can also be provided ventilation slots 85 to allow for an air exchange of the internal area of the base 8 enclosing, e.g., the cooling means 5.

The apparatus 1 further comprises a controller 10 which is configured to keep the temperature of the cooling fluid at a first predetermined temperature of between -10 °C and -60 °C for (snap or rapidly) freezing the specimen when the specimen is placed in the receiving means 2 (i.e. the reservoir 3, 30 or the like) containing said cooling fluid. The controller 10 is further configured such that after the specimen is placed in the receiving means 2 to reduce - with a predetermined cooling profile - the temperature of the cooling fluid to a second predetermined temperature suitable for preserving the specimen. The controller 10 is configured to control the cooling means 5 by a PID algorithm performing a predetermined cooling profile with a cooling rate of between 0,5 °C per minute and 3 °C per minute, preferably 1 °C per minute. The apparatus 1 including the cooling means 5 as well as the controller 10 is driven by a power supply 9.

The apparatus 1 may further comprise a display 11 preferably having a touch screen for controlling the apparatus 1. Such a display 11 is exemplarily shown in figure 4. The display 11 may comprise different display areas showing, for instance, the actual temperature (area A1), the set temperature (are A2) as well as the time set for the cooling rate, e.g. 1°C per time entered on the display (area A3). There can also be provided a "Start" button A4 to start the first and/or second method step. Further, buttons to increase or decrease the set temperature (A5) or the time (A6) can also be provided. The display 11 of figure 4 is only exemplarily but can vary and be modified in various ways being most suitable for the particular requirements.

Because most of the parts of the apparatus 1, particularly the cooled parts like the receiving means 2, are made of metal material, these metal parts - when being cooled at very low temperatures (like -40 °C to -80 °C) and further exposed to ambient air - are exposed to quick generation of moisture and condensations. The condensations can create practical problems to perform the freezing procedure of the invention. To avoid this problem, the apparatus 1 may further comprise a defrost arrangement like an air pump and a reverse heating element to defrost the working area W preferably at preset cycles. These components of the defrost arrangement can also be driven by the power supply 9.

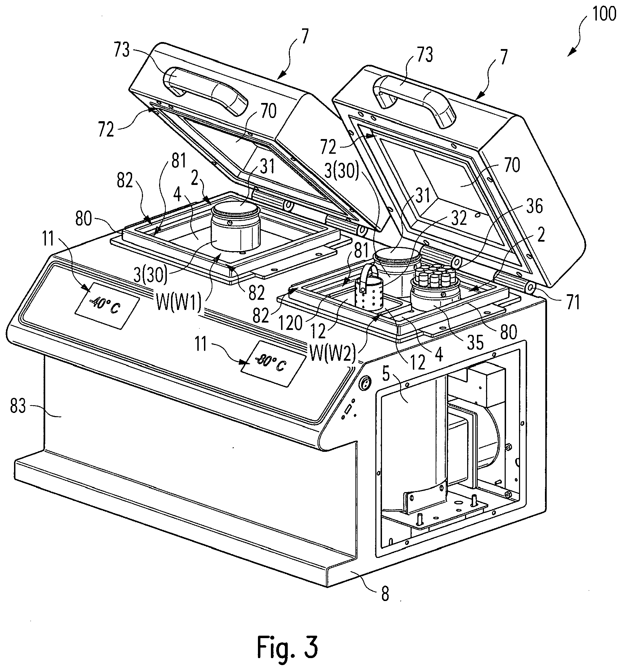

With respect to figure 3, a further embodiment of the present apparatus 100 is shown. This apparatus 100 is quite similar to the apparatus according to the first embodiment. Same features are provided with same reference numerals. To avoid unnecessary repetition, only the differing features to the first embodiment are described herein.

The apparatus 100 according to the second embodiment comprises two separate working areas W while also only one (first embodiment) or even three or more are also possible. These working areas W can be processed simultaneously. It is also possible to use one of the working areas W1 (in figure 3 the left working area) for the first method step and the other of the working areas W2 (in figure 3 the right working area) for the second method step. Each of the working areas can be provided with an individual cover or with a combined cover. Also, a display or touch screen 11 can be provided for each of the working areas W or one for all working areas W.

In the following, a method for cryopreserving biological specimens, such as human and animal tissues, cell types and subcellular materials for biobanking cryopreservation is described.

In a first step of this method, a specimen is placed in a cooling fluid pre-set at a first predetermined temperature of between -10 °C and -60 °C for snap freezing - i.e. rapidly freezing - the specimen. In a preferred embodiment, the predetermined temperature is set at a temperature between -20 °C and -50 °C, more preferably between -35 °C and -45 °C, most preferably at about -40°C. It is noted that the desired effect of the present invention can only be obtained if the specimen is sufficiently cooled down (frozen) in the first step. It is well known that down to about -5°C, the cells and their surrounding medium remain unfrozen mainly because of supercooling but also because of the depression of the freezing point by the protective solutes that are frequently present. Hence, a sufficient temperature of (or temperature drop to) a desired temperature within the given temperature range (dependent on the type of sample) is required at which the specimen got at least partially frozen to obtain the advantages of snap freezing without the disadvantages of a sudden temperature drop down to a very low (preservation) temperature.

The specimen can be either directly placed in the cooling fluid of, for instance, a removable reservoir 3 like the vessel 30 shown in figure 1, or it can be placed in a container 32, 36 like a cryovial 36 or a basket 32, preferably made of PTFE, which is then placed in the cooling fluid which, for instance, can be stored in the vessel 30 (e.g. for receiving the basket 32) or a corresponding (aluminum) receptacle or block having a corresponding number of receiving areas or openings (e.g. for receiving the cryovials 36).

According to a second step of the method, following the first step of the method, the temperature of the cooling fluid is reduced to a second predetermined temperature suitable for preserving said specimen which has been placed in the cooling fluid in the first step of the method. This second predetermined temperature can be a temperature between -70 °C and -90 °C, preferably between -75°C and -85 °C, most preferably of about -80°C. The reduction of the temperature in the second step of the method is performed by a predetermined cooling profile which is performed with a predetermined cooling rate of between 0,5°C per minute and 3°C per minute, perferably of 1°C per minute.

Preferably, in the first step of the method, the specimen is placed by an operator in the cooling fluid and then, the operator can start the coaling process of the second step of the method (e.g. by pressing a corresponding button on the display/touch screen 11) manually.

The temperature of the cooling fluid is preferably constantly measured. Therefore, a dedicated number of temperature sensors are provided in the apparatus 1 to constantly measure the temperature of the cooling fluid and/or the specimen placed therein. The temperature can either be measured directly or indirectly with corresponding sensors. It is thus also possible that the second step of the method is automatically started once the cooling fluid or specimen has reached the desired temperature or once the specimen has been placed into the cooling fluid; if necessary or required after a predetermined time after placing the specimen in the cooling fluid and/or after reaching the desired temperature has lapsed.

The temperature reduction in the second step of the method is controlled by a PID algorithm of the PID controller 10. The predetermined cooling profile can be linear, non-linear or stepwise. This is dependent on the type of sample to be cryo-preserved. The refrigerated parts can thus be kept or set at a precise temperature. Thanks to the predetermined cooling profile and thus the dedicated temperature monitoring circuit and preferably also the stirling cooler, the (PID) software of the unit controller 10 is preferably able to maintain the desired temperature within, e.g., +/- 1°C which makes it possible to ensure a perfect procedure reproducibility. The use of the method having the dedicated two steps and the predetermined cooling profile for the second step makes it possible when dealing with cryo-preservations to ensure perfect procedure reproducibility and thus a standardization of this process.

According to a preferred embodiment of the invention, the first step of the method comprises placing a plurality of specimen successively or all at once in the cooling fluid and only after a predefined number of specimens are placed in the pre-cooled cooling fluid, the second step is carried out.

The present invention is not limited to the embodiments as described above. The invention is defined in the claims.

## Claims

1. A method for cryopreserving biological specimens, such as human and animal tissues, cell types and subcellular materials for biobanking cryopreservation, comprising the steps of:
i) placing said specimen in a cooling fluid pre-set at a first predetermined temperature of between -10°C and -60°C for snap freezing the specimen, and
ii) reducing the temperature of said cooling fluid to a second predetermined temperature suitable for preserving said specimen,
wherein the reduction of the temperature in step ii) is performed by a predetermined cooling profile, and
wherein the predetermined cooling profile is performed with a predetermined cooling rate of between 0,5°C per minute and 3°C per minute.

2. The method according to claim 1, wherein said first predetermined temperature is set between -20°C and -50°C, preferably between -35°C and -45°C, most preferably at - 40°C and/or wherein said second predetermined temperature is between -70°C and - 90°C, preferably between -75°C and -85°C, most preferably -8o°C.

3. The method according to any one of the preceding claims, wherein the predetermined cooling profile is performed with a predetermined cooling rate of 1°C per minute.

4. The method according to any one of the preceding claims, wherein said predetermined cooling profile is linear, non-linear or stepwise.

5. The method according to any one of the preceding claims, wherein the temperature of the cooling fluid and/or the specimen is preferably continuously and directly or indirectly measured and the temperature reduction in step ii) is controlled by a PID algorithm.

6. The method according to any one of the preceding claims, wherein the specimen is directly placed in the cooling fluid or placed in a container (32, 36) like a cryovial (36) or a basket (32), preferably made of PTFE, which is placed in the cooling fluid.

7. The method according to any one of the preceding claims, wherein step i) comprises placing a plurality of specimens successively or all at once in the cooling fluid and only after a predefined number of specimens are placed in the pre-cooled cooling fluid, step ii) is carried out.

8. The method according to any one of the preceding claims, wherein said cooling fluid is a cooling liquid which preferably does not freeze during the process, wherein said cooling liquid preferably is iso-pentane or a non-flammable substitute cooling liquid like NOVEC™ 7000.

9. An apparatus (1, 100) for cryopreserving biological specimens such as human and animal tissues, cell types and subcellular materials for biobanking cryopreservation, comprising:
a receiving means (2) for receiving a cooling fluid and said specimen, and
cooling means (5) to cool said fluid in said receiving means (2), wherein the apparatus (1, 100) further comprises a controller (10) configured to
i) keep the temperature of said cooling fluid at a first predetermined temperature of between -10°C and -60°C for snap freezing said specimen when said specimen is placed in said receiving means (2) containing said cooling fluid, and
ii) reduce the temperature of said cooling fluid to a second predetermined temperature suitable for preserving said specimen with a predetermined cooling profile, and
iii) control the cooling means (5) by a PID algorithm performing the predetermined cooling profile with a cooling rate of between 0,5°C per minute and 3°C per minute.

10. The apparatus (1, 100) according to claim 9, wherein the controller (10) is configured to control the cooling means (5) by a PID algorithm preferably performing the predetermined cooling profile with a cooling rate of 1°C per minute.

11. The apparatus (1, 100) according to claims 9 or 10, wherein said receiving means (2) comprises:
- at least one or a plurality of reservoirs (3, 30) for receiving the cooling fluid and for receiving the specimen and/or a container like a cryovial (36) or a basket (32), preferably made of PTFE, carrying the specimen and to be placed in the cooling fluid, and
- a working means (4) like a working plate being in thermal contact with the at least one reservoir (3, 30), wherein the reservoir (3, 30) is integrally formed with the working means (4) and/or the reservoir (3, 30) is preferably removably placed on or attached to the working means (4), and
- preferably a transfer means (6) thermally connecting the cooling means (5) and the working means (4) and/or reservoir (3, 30).

12. The apparatus (1, 100) according to any one of claims 9 to 11, wherein said receiving means (2) is made of a material having a high thermal conductivity like metals, e.g. aluminum or stainless steel.

13. The apparatus (1, 100) according to any one of claims 9 to 12, wherein said cooling means (5) is a stirling cooler preferably using Argon gas.

14. The apparatus (1, 100) according to any one of claims 9 to 13, wherein said cooling means (5) has a cooling part (50) which is in thermal contact with at least a part of the receiving means (2) or at least the reservoir (3, 30), preferably in direct physical contact therewith.

15. The apparatus (1, 100) according to any one of claims 9 to 14, further comprising a cover (7) to provide a closed working area (W) at least enclosing the receiving means (2) or reservoir (3, 30) and to keep the working area (W) thermally insulated from the external environment, wherein said apparatus (1, 100) preferably further comprises a defrost arrangement like an air pump and a reverse heating element to defrost the working area (W) preferably at preset cycles.

## Patentansprüche

1. Verfahren zum Kryokonservieren biologischer Proben, wie menschlicher und tierischer Gewebe, Zellarten und subzellulärer Materialien für eine Kryokonservierung in einer Biobank, das die Schritte aufweist:
i) Anordnen der Proben in einem Kühlungsfluid, das auf eine erste bestimmte Temperatur von zwischen -10 °C und -60 °C zum Schnellgefrieren (Snap Freezing) der Proben festgelegt ist, und
ii) Absenken der Temperatur des Kühlungsfluids auf eine zweite bestimmte Temperatur, die zur Konservierung der Proben geeignet ist,
wobei die Absenkung der Temperatur in Schritt ii) anhand eines bestimmten Kühlungsprofils durchgeführt wird, und
wobei das bestimmte Kühlungsprofil mit einer bestimmten Kühlungsrate von zwischen 0,5 °C pro Minute und 3 °C pro Minute durchgeführt wird.

2. Verfahren nach Anspruch 1, wobei die erste bestimmte Temperatur zwischen -20 °C und -50 °C festgelegt ist, vorzugsweise zwischen -35 °C und -45 °C, am meisten bevorzugt auf -40 °C und/oder wobei die zweite bestimmte Temperatur zwischen -70 °C und -90 °C liegt, vorzugsweise zwischen -75 °C und -85 °C, am meisten bevorzugt bei -80 °C.

3. Verfahren nach einem der vorhergehenden Ansprüche, wobei das bestimmte Kühlungsprofil mit einer bestimmten Kühlungsrate von 1°C pro Minute durchgeführt wird.

4. Verfahren nach einem der vorhergehenden Ansprüche, wobei das bestimmte Kühlungsprofil linear, nicht-linear oder schrittweise ist.

5. Verfahren nach einem der vorhergehenden Ansprüche, wobei die Temperatur des Kühlungsfluids und/oder der Proben vorzugsweise fortlaufend und direkt oder indirekt gemessen wird und die Temperaturabsenkung in Schritt ii) mit einem PID-Algorithmus gesteuert wird.

6. Verfahren nach einem der vorhergehenden Ansprüche, wobei die Probe direkt im Kühlungsfluid oder in einem Behältnis (32, 36), wie einer Kryoampulle (36) oder einem Behälter (32), bevorzugt hergestellt aus PTFE, angeordnet wird, die/der im Kühlungsfluid angeordnet wird.

7. Verfahren nach einem der vorhergehenden Ansprüche, wobei Schritt i) das Anordnen einer Vielzahl von Proben nacheinander oder von allen gleichzeitig im Kühlungsfluid aufweist, und Schritt ii) nur durchgeführt wird, nachdem eine bestimmte Anzahl von Proben im vorgekühlten Kühlungsfluid angeordnet sind.

8. Verfahren nach einem der vorhergehenden Ansprüche, wobei das Kühlungsfluid eine Kühlungsflüssigkeit ist, die vorzugsweise während des Prozesses nicht gefriert, wobei die Kühlungsflüssigkeit vorzugsweise ISO-Pentan oder eine nichtentzündliche Ersatz-Kühlungsflüssigkeit, wie NOVEC™ 7000, ist.

9. Vorrichtung (1, 100) zum Kryokonservieren biologischer Proben, wie menschlicher und tierischer Gewebe, Zellarten und subzellulärer Materialien für eine Kryokonservierung in einer Biobank, die aufweist:
ein Aufnahmemittel (2) zum Aufnehmen eines Kühlungsfluids und der Proben, und Kühlungsmittel (5) zum Kühlen des Fluids im Aufnahmemittel (2),
wobei die Vorrichtung (1, 100) weiterhin eine Steuereinheit (10) aufweist, die dazu ausgestaltet ist,
i) die Temperatur des Kühlungsfluids auf einer ersten bestimmten Temperatur von zwischen -10 °C und -60 °C zum Schnellgefrieren (Snap Freezing) der Probe zu halten, wenn die Probe im Aufnahmemittel (2), das das Kühlungsfluid enthält, angeordnet ist, und
ii) die Temperatur des Kühlungsfluids auf eine zweite bestimmte Temperatur abzusenken, die zur Konservierung der Proben geeignet ist, und
iii) das Kühlungsmittel (5) mit einem PID-Algorithmus zu steuern, der das bestimmte Kühlungsprofil mit einer Kühlungsrate von zwischen 0,5 °C pro Minute und 3 °C pro Minute ausführt.

10. Vorrichtung (1, 100) nach Anspruch 9, wobei die Steuereinheit (10) dazu ausgestaltet ist, das Kühlungsmittel (5) mit einem PID-Algorithmus zu steuern, um vorzugsweise das bestimmte Kühlungsprofil mit einer Kühlungsrate von 1 °C pro Minute durchzuführen.

11. Vorrichtung (1,100) nach Anspruch 9 oder 10, wobei das Aufnahmemittel (2) aufweist:
- wenigstens eines oder eine Vielzahl von Reservoiren (3, 30) zur Aufnahme des Kühlungsfluids und zur Aufnahme der Probe und/oder eines Behältnisses, wie einer Kryoampulle (36) oder eines Behälters (32), vorzugsweise aus PTFE hergestellt, die/der die Probe enthält und die/der im Kühlungsfluid anzuordnen ist, und
- ein Arbeitsmittel (4), wie eine Arbeitsplatte, die in thermischen Kontakt mit dem wenigsten einem Reservoir (3, 30) steht, wobei das Reservoir (3, 30) integriert mit dem Arbeitsmittel (4) ausgebildet ist und/oder das Reservoir (3, 30) vorzugsweise am Arbeitsmittel (4) angeordnet oder daran angebracht ist, und
- vorzugsweise ein Übertragungsmittel (6), das das Kühlungsmittel (5) und das Arbeitsmittel (4) und/oder das Reservoir (3, 30) thermisch verbindet.

12. Vorrichtung (1, 100) nach einem der vorhergehenden Ansprüche 9 bis 11, wobei das Aufnahmemittel (2) aus einem Material mit einer hohen Wärmeleitfähigkeit, wie Metall, zum Beispiel Aluminium oder Edelstahl, hergestellt ist.

13. Vorrichtung (1, 100) nach einem der Ansprüche 9 bis 12, wobei das Kühlungsmittel (5) ein Stirling-Kühler ist, der vorzugsweise Argongas verwendet.

14. Vorrichtung (1, 100) nach einem der Ansprüche 9 bis 13, wobei das Kühlungsmittel (5) eine Kühlkomponente (50) aufweist, die in thermischen Kontakt mit wenigstens einem Teil des Aufnahmemittels (2) oder wenigstens dem Reservoir (3, 30) ist, vorzugsweise in direktem physikalischen Kontakt damit steht.

15. Vorrichtung (1, 100) nach einem der Ansprüche 9 bis 14, die weiterhin aufweist eine Abdeckung (7) zur Bereitstellung eines geschlossenen Arbeitsbereichs (W), der wenigstens das Aufnahmemittel (2) oder das Reservoir (3, 30) einschließt und den Arbeitsbereich (W) thermisch von der äußeren Umgebung isoliert hält, wobei die Vorrichtung (1, 100) vorzugsweise weiterhin eine Enteisungsanordnung aufweist, wie eine Luftpumpe und ein Umkehrerhitzungselement, um den Arbeitsbereich (W) vorzugsweise in vorgegebenen Zyklen zu enteisen.

## Revendications

1. Procédé pour cryoconserver des échantillons biologiques, tels que des tissus humains et animaux, des types cellulaires et du matériel subcellulaire à des fins de cryoconservation dans une biobanque, comprenant les étapes consistant à :
i) placer ledit échantillon dans un liquide de refroidissement prédéfini à une première température prédéterminée comprise entre -10 °C et -60 °C pour rapidement congeler l'échantillon, et
ii) réduire la température dudit liquide de refroidissement à une seconde température prédéterminée pour conserver ledit échantillon,
dans lequel la réduction de la température à l'étape ii) est réalisée par un profil de refroidissement prédéterminé, et
dans lequel le profil de refroidissement prédéterminé est réalisé à une vitesse de refroidissement prédéterminée comprise entre 0,5 °C par minute et 3 °C par minute.

2. Procédé selon la revendication 1, dans lequel ladite première température prédéterminée est définie entre -20 °C et -50 °C, de préférence entre -35 °C et - 45 °C, de la manière la plus préférée entre toutes à -40 °C et/ou dans lequel ladite seconde température prédéterminée est comprise entre -70 °C et -90 °C, de préférence entre -75 °C et -85 °C, de la manière la plus préférée entre toutes -80 °C.

3. Procédé selon l'une quelconque des revendications précédentes, dans lequel le profil de refroidissement prédéterminé est réalisé à une vitesse de refroidissement prédéterminée de 1 °C par minute.

4. Procédé selon l'une quelconque des revendications précédentes, dans lequel ledit profil de refroidissement prédéterminé est linéaire, non linéaire ou par étapes.

5. Procédé selon l'une quelconque des revendications précédentes, dans lequel la température du liquide de refroidissement et/ou de l'échantillon est de préférence mesurée en continu et directement ou indirectement et la réduction de la température à l'étape ii) est contrôlée par un algorithme de PID.

6. Procédé selon l'une quelconque des revendications précédentes, dans lequel l'échantillon est directement placé dans le liquide de refroidissement ou est placé dans un récipient (32, 36) comme un cryotube (36) ou un panier (32), de préférence constitué de PTFE, qui est placé dans le liquide de refroidissement.

7. Procédé selon l'une quelconque des revendications précédentes, dans lequel l'étape i) comprend le fait de placer une pluralité d'échantillons successivement ou en même temps dans le liquide de refroidissement et, seulement après avoir placé un nombre prédéfini d'échantillons dans le liquide de refroidissement pré-refroidi, l'étape ii) est réalisée.

8. Procédé selon l'une quelconque des revendications précédentes, dans lequel ledit liquide de refroidissement est un liquide de refroidissement qui de préférence ne gèle pas pendant le processus, où ledit liquide de refroidissement est de préférence de l'isopentane ou un liquide de refroidissement de substitution non inflammable tel que le NOVEC™ 7000.

9. Appareil (1, 100) pour cryoconserver des échantillons biologiques tels que des tissus humains et animaux, des types cellulaires et du matériel subcellulaire à des fins de cryoconservation dans une biobanque, comprenant :
un moyen de réception (2) pour recevoir un liquide de refroidissement et ledit échantillon, et
un moyen de refroidissement (5) pour refroidir ledit liquide dans ledit moyen de réception (2),
où l'appareil (1, 100) comprend en outre un contrôleur (10) configuré pour
i) maintenir la température dudit liquide de refroidissement à une première température prédéterminée comprise entre -10 °C et -60 °C pour rapidement congeler ledit échantillon lorsque ledit échantillon est placé dans ledit moyen de réception (2) contenant ledit liquide de refroidissement, et
ii) réduire la température dudit liquide de refroidissement à une seconde température prédéterminée appropriée pour conserver ledit échantillon avec un profil de refroidissement prédéterminé, et
iii) contrôler le moyen de refroidissement (5) par un algorithme de PID exécutant le profil de refroidissement prédéterminé à une vitesse de refroidissement comprise entre 0,5 °C par minute et 3 °C par minute.

10. Appareil (1, 100) selon la revendication 9, dans lequel le contrôleur (10) est configuré pour contrôler le moyen de refroidissement (5) par un algorithme de PID exécutant de préférence le profil de refroidissement prédéterminé à une vitesse de refroidissement de 1 °C par minute.

11. Appareil (1, 100) selon les revendications 9 ou 10, dans lequel ledit moyen de réception (2) comprend :
- au moins un ou une pluralité de réservoirs (3, 30) pour recevoir le liquide de refroidissement et pour recevoir l'échantillon et/ou un récipient comme un cryotube (36) ou un panier (32), de préférence constitué de PTFE, contenant l'échantillon et devant être placé dans le liquide de refroidissement, et
- un moyen de travail (4) comme une plaque de travail qui est en contact thermique avec le au moins un réservoir (3, 30), où le réservoir (3, 30) fait partie intégrante du moyen de travail (4) et/ou le réservoir (3, 30) est de préférence placé de manière amovible sur ou est fixé au moyen de travail (4), et
- de préférence un moyen de transfert (6) connectant thermiquement le moyen de refroidissement (5) et le moyen de travail (4) et/ou le réservoir (3, 30).

12. Appareil (1, 100) selon l'une quelconque des revendications 9 à 11, dans lequel ledit moyen de réception (2) est constitué d'un matériau possédant une conductivité thermique élevée tel que des métaux, par exemple, de l'aluminium ou de l'acier inoxydable.

13. Appareil (1, 100) selon l'une quelconque des revendications 9 à 12, dans lequel ledit moyen de refroidissement (5) est un refroidisseur Stirling utilisant de préférence du gaz argon.

14. Appareil (1, 100) selon l'une quelconque des revendications 9 à 13, dans lequel ledit moyen de refroidissement (5) possède une partie de refroidissement (50) qui est en contact thermique avec au moins une partie du moyen de réception (2) ou au moins le réservoir (3, 30), de préférence en contact physique direct avec celui-ci.

15. Appareil (1, 100) selon l'une quelconque des revendications 9 à 14, comprenant en outre un couvercle (7) pour obtenir une surface de travail fermée (W) renfermant au moins le moyen de réception (2) ou le réservoir (3, 30) et pour maintenir la surface de travail (W) thermiquement isolée de l'environnement externe, où ledit appareil (1, 100) comprend en outre de préférence un agencement de dégivrage comme une pompe à air et un élément de chauffage inverse pour dégivrer la surface de travail (W), de préférence selon des cycles prédéfinis.
